# EUROPÄISCHE PATENTSCHRIFT

(11) **EP 3 220 039 B1**
(45) Veröffentlichungstag und Bekanntmachung des Hinweises auf die Patenterteilung: **01.08.2018**
(21) Anmeldenummer: 16160571.2
(22) Anmeldetag: 16.03.2016
(51) Int. Cl.: F16P 3/14

(54) **SYSTEM MIT EINEM MOBILEN SCHLÜSSELGERÄT**
SYSTEM WITH A MOBILE KEY DEVICE
SYSTEME COMPRENANT UN APPAREIL MOBILE A CODE

(43) Veröffentlichungstag der Anmeldung: 20.09.2017
(73) Patentinhaber: SICK AG, 79183 Waldkirch (DE)
(72) Erfinder: Brunner, Fabio, 79100 Freiburg (DE)

(56) Entgegenhaltungen:
- WO-A1-03/025834
- DE-U1-202004 007 343

## Beschreibung

Die vorliegende Erfindung betrifft ein System mit einem mobilen Schlüsselgerät zum Lesen und Schreiben von Daten nach dem Oberbegriff von Anspruch 1.

Die DE 10 2010 011 766 A1 offenbart eine Überwachungseinrichtung für mindestens einen Zustand mit einem Transponder, einem Empfänger und einer Auswerteschaltung.

Die WO 03025834 A1 offenbart ein mobiles Lesegerät zum Auslesen von Informationen aus einem Transponder. Das mobile Lesegerät umfasst eine erste Sende-/Empfangsvorrichtung zum Aussenden eines Auslesesignals an einen Transponder und zum Empfangen eines von dem Transformator in Reaktion auf das Auslesesignal ausgesendeten Antwortsignals. Das Antwortsignal umfasst Identifikationsinformationen zum Identifizieren des Transponders. Die erste Sende-/Empfangseinrichtung arbeitet mit drahtloser Kommunikation auf der Basis von elektromagnetischen Wellen in einem ersten Frequenzbereich. Das mobile Lesegerät umfasst ferner eine zweite Sende-/Empfangseinrichtung zur drahtlosen Kommunikation mit einer Basisstation auf der Basis von elektromagnetischen Wellen in einem zweiten Frequenzbereich. Die zweite Sende-/Empfangseinrichtung sendet die von der ersten Sende-/Empfangseinrichtung in dem Antwortsignal empfangene Identifikationsinformation an die Basisstation.

Die DE 20 2004 007 343 U1 offenbart eine mobile Vorrichtung zum Empfangen und Senden von Daten mittels wenigstens eines Transponders, wobei eine Transponderleseeinrichtung zum Lesen der in dem Transponder gespeicherten Daten und eine aktive Sendeeinheit zum Senden dieser Daten vorgesehen ist.

Eine Aufgabe der Erfindung besteht darin, ein verbessertes System mit einem mobilen Schlüsselgerät zum Lesen und Schreiben von Daten bereitzustellen. Eine weitere Aufgabe besteht darin, vielseitigere Einsatzmöglichkeiten für das Schlüsselgerät bereitzustellen und die Verwendung in sicherheitsgerichteten Geräten zu ermöglichen.

Die Aufgabe wird gemäß Anspruch 1 gelöst durch ein System mit einem mobilen Schlüsselgerät zum Lesen und Schreiben von Daten von mindestens einem externen Gerät einer Anlage, wobei die Daten mindestens Identifizierungsdaten für das zu überprüfende Gerät umfassen und wobei das mobile Schlüsselgerät eine erste Sende-/Empfangseinheit aufweist, mittels der die Daten drahtlos zwischen dem Gerät zu dem Schlüsselgerät übertragbar sind, wobei das Schlüsselgerät einen ersten Speicher aufweist, das Schlüsselgerät mindestens einen ersten sicheren Kanal aufweist mit einer ersten Auswerteeinheit, und der ersten Sende-/Empfangseinheit und mindestens einen zweiten Kanal aufweist mit einer zweiten Auswerteeinheit und einer zweiten Sende-/Empfangseinheit, mittels der Daten drahtlos zwischen dem Gerät zu dem Schlüsselgerät übertragbar sind, wobei die Daten wenigstens mit einer der Sende-/Empfangseinheiten übertragbar sind.

Bei dem System kann es sich beispielsweise um ein Sicherheitssystem handeln, beispielsweise um ein Sicherheitssystem gemäß Maschinensicherheit, beispielsweise gemäß der Norm EN/ISO 1384-1 bzw. der Norm EN/IEC 62061, die beispielsweise den Rahmen für funktionale Sicherheit von sicherheitsbezogenen elektrischen Steuerungssystemen und deren Untersystemen an Maschinen bereitstellt.

Der erste sichere Kanal mit der ersten Auswerteeinheit kann beispielsweise selbstüberprüfende Strukturen aufweisen. Beispielsweise weist die erste Auswerteeinheit eine zweikanalige Struktur auf, welche sich gegenseitig überprüfen.

Das Schlüsselgerät gemäß der Erfindung kann sehr einfach ausgebildet sein. Es handelt sich beispielsweise um ein handliches Schlüsselgerät, das problemlos von einer Person getragen, bzw. mitgeführt werden kann. Optional weist das Schlüsselgerät Bedienelemente und optional mindestens ein Anzeigeelement auf.

Weiter weist das Schlüsselgerät die Auswerteeinheiten auf. Die Auswerteeinheiten sind beispielsweise durch einen Mikrocontroller gebildet. Weiter weist das Schlüsselgerät den Speicher auf, um Daten auf dem Schlüsselgerät abzuspeichern. Optional ist ein zweiter Speicher vorgesehen der mit der zweiten Auswerteeinheit verbunden ist. Dadurch ist es möglich Daten redundant abzuspeichern und die Daten gegenseitig zu vergleichen.

Die erste Auswerteeinheit und die zweite Auswerteeinheit können optional eine zweikanalige Auswerteeinheit bilden, wobei zwischen den Auswerteeinheiten eine Schnittstelle vorgesehen ist, um einen Quervergleich von Daten zwischen den Auswerteeinheiten durchzuführen. Dadurch kann eine Sicherheit des Schlüsselgerätes erhöht werden.

Bei der Anlage kann es sich beispielsweise um eine Industrieanlage zur Herstellung von Produkten handeln. Beispielsweise handelt es sich hierbei um einen Teil einer Produktionsanlage für Automobile. Bei der Anlage kann es sich auch um einen Teil einer Maschine oder um eine Anlage mit mehreren Maschinen handeln. Die Anlage weist einen Sicherheitsbereich auf, der nicht von Personen betreten werden darf, wenn die Anlage aktiv ist, da die Person durch Teile der Anlage gefährdet werden kann. Beispielsweise handelt es sich bei der Anlage um einen oder mehrere Roboter, deren gefährlicher Wirkungsbereich innerhalb des Sicherheitsbereiches liegt.

Das mindestens eine externe Gerät ist beispielsweise innerhalb des Sicherheitsbereiches angeordnet. Das oder die Geräte sind beispielsweise ortsfest angeordnet, so dass diese nicht entfernt werden können. Es kann sich aber auch um mobile Geräte handeln. Das Gerät ist beispielsweise in der Anlage integriert.

Das Gerät enthält mindestens Daten zur Identifizierung, die über die erste Sende-/Empfangseinheit oder die zweite Sende/Empfangseinheit drahtlos von dem Schlüsselgerät abgerufen werden können. Bei der ersten Sende-/Empfangseinheit oder der zweiten Sende-/Empfangseinheit handelt es sich bevorzugt um eine Funk-Sende-/Empfangseinheit.

Bei dem Gerät kann es sich beispielsweise um ein Ventil, einen Aktor, einen Sensor oder ein sonstiges elektrisches bzw. elektronisches Gerät handeln.

Eine erste Art von jeweiligen Daten, die nachfolgend beispielhaft erläutert wird, wird vorzugsweise mit der ersten Sende-/Empfangseinheit übertragen.

Bei diesen Daten kann es sich beispielsweise um Steuerdaten für das Gerät handeln, die von dem Schlüsselgerät an das Gerät übermittelt werden.

Beispielsweise können die Daten Befehle für die Maschinensteuerung, beispielsweise Abschaltbefehle oder Steuerbefehle enthalten.

Es kann sich bei den Daten auch um Identifizierungsdaten oder Berechtigungsdaten für einen Benutzer oder eine Person handeln.

Es kann sich bei den Daten auch um Schlüsseldaten handeln, um beispielsweise eine Maschine in einem nicht aktivierten Zustand zu halten, und einen unsicheren Start der Maschine zu vermeiden.

Eine zweite Art von jeweiligen Daten, die nachfolgend beispielhaft erläutert wird, wird vorzugsweise mit der zweiten Sende-/Empfangseinheit übertragen.

Neben den Daten zur Identifizierung werden Daten zum Gerätestatus und/oder Gerätedaten an das Schlüsselgerät übertragen. Dabei kann es sich um Betriebsdaten, Prozessdaten oder ähnliche Daten handeln. Beispielsweise handelt es sich bei den Daten um Daten zum Gerätestatus, um Fehlermeldungen oder um Daten zum Betriebsverhalten, beispielsweise Ausfallzeiten des Gerätes. Beispielsweise handelt es sich um Druckwerte eines Ventils.

Es kann sich aber auch um Bestätigungsdaten oder Protokolldaten des Gerätes handeln, die an das Schlüsselgerät übertragen werden.

Weiter kann es sich bei den Daten auch um Wartungsdaten oder Produktionsdaten handeln, die von dem Gerät an das Schlüsselgerät übertragen werden.

Gemäß der Erfindung wird das Schlüsselgerät von der Person mitgeführt, um die Geräte zu erreichen. Während die Person das Schlüsselgerät mit sich führt, kann die Anlage beispielsweise deaktiviert sein.

Das Übertragen von Daten zwischen dem Schlüsselgerät und dem Gerät kann automatisch erfolgen. D. h. wenn sich die Person dem Gerät auf einen bestimmten Mindestabstand genähert hat, werden die Daten des Geräts automatisch von dem Schlüsselgerät gelesen.

Die Person, die das Schlüsselgerät mit sich führt, kann optional mit dem Schlüsselgerät selbst von dem Gerät die Daten übertragen oder die Daten an das Gerät übertragen. Dazu kann beispielsweise vorgesehen sein, dass von der Person beispielsweise eine Aktion, beispielsweise ein Betätigen einer Taste an dem Schlüsselgerät durchgeführt werden muss. Dadurch ist gewährleistet, dass die Daten des Geräts durch das Schlüsselgerät nicht automatisch übertragen werden, sondern immer eine aktive Handlung der Person notwendig ist, um die Daten zu übertragen.

Das Gerät kann beispielsweise sehr einfach ausgeführt sein, um die Daten bereitzustellen. Das Gerät benötigt im einfachsten Fall zusätzlich einen Speicher und eine Vorrichtung, beispielsweise eine Sende-/Empfangseinheit zur Datenbereitstellung.

Gewöhnlich sind eine Vielzahl von Geräten vorhanden. Insbesondere bei großen Anlagen bzw. großen Sicherheitsbereichen, bzw. große Anlagen mit einer Mehrzahl von Sicherheitsbereichen sind mehrere Geräte vorhanden. Dabei kann vorgesehen sein, dass das Schlüsselgerät mindestens Daten von einem Gerät überträgt. Jedoch ist insbesondere auch vorgesehen, dass ein Schlüsselgerät von mehreren Geräten Daten überträgt. Insbesondere ist es vorgesehen, dass das Schlüsselgerät von mehreren Geräten in einer bestimmten Reihenfolge Daten überträgt.

Die Kommunikation zwischen dem Schlüsselgerät und dem Gerät kann unidirektional oder bidirektional stattfinden. Im einfachsten Fall genügt ein einfaches Lesen der Daten des Gerätes. Jedoch kann es auch vorgesehen sein, dass von dem Schlüsselgerät Daten in das Gerät geschrieben werden.

In Weiterbildung der Erfindung weist die erste Sende-/Empfangseinheit eine niedrige Reichweite und die zweite Sende-/Empfangseinheit eine hohe Reichweite auf.

Die niedrige Reichweite beträgt beispielsweise 0 bis 1 m, insbesondere 0 bis 500 mm, insbesondere 0 bis 250 mm.

Die hohe Reichweite beträgt beispielsweise 0 bis 10 m, insbesondere 0 bis 5 m oder insbesondere 0 bis 2 m.

Dadurch ist gewährleistet, dass durch die erste Sende-/Empfangseinheit nur dann Daten von dem Gerät übertragbar sind, wenn eine bestimmte Distanz zu dem Gerät unterschritten wird. Dadurch wird gewährleistet, dass bestimmte bereits erläuterte Daten nur dann übertragbar sind, wenn gewährleistet ist, dass sich das Schlüsselgerät mit einer Mindestdistanz zum Gerät befindet. Dies ist beispielsweise dann sinnvoll, wenn der Bediener selbst in der Nähe des Gerätes sein soll, um beispielsweise eine Auswirkung einer durchgeführten Aktion oder eines durchgeführten Befehls zu beobachten.

Dadurch können durch die erste Sende-/Empfangseinheit auch nicht automatisch Daten übermittelt werden, wenn sich das Schlüsselgerät zu weit weg von dem Gerät befindet.

Jedoch kann über die zweite Sende-/Empfangseinheit eine Datenübertragung vorgenommen werden, bei einer hohen Reichweite also einer größeren Distanz zum Gerät, als bei der ersten Sende-/Empfangseinheit.

Dadurch kann über die zweite Sende-/Empfangseinheit immer eine Datenübertragung durchgeführt werden, bevor dies mit der ersten Sende-/Empfangseinheit möglich ist, wenn sich die Person mit dem Schlüsselgerät dem Gerät nähert. Dadurch kann beispielsweise eine Datenübertragung der ersten Sende-/Empfangseinheit durch eine Datenübertragung der zweiten Sende-/Empfangseinheit vorbereitet werden.

In Weiterbildung der Erfindung ist der erste Kanal zum Senden und Empfangen von sicheren Daten ausgebildet und der zweite Kanal zum Senden und Empfangen von nicht sicheren Daten ausgebildet.

Eine erste Art von jeweiligen sicheren Daten, die nachfolgend beispielhaft erläutert wird, wird vorzugsweise mit der ersten Sende-/Empfangseinheit übertragen.

Bei diesen Daten kann es sich beispielsweise um Steuerdaten für das Gerät handeln, die von dem Schlüsselgerät an das Gerät übermittelt werden.

Beispielsweise können die Daten Befehle für die Maschinensteuerung, beispielsweise Abschaltbefehle oder Steuerbefehle, enthalten.

Es kann sich bei den Daten auch um Identifizierungsdaten oder Berechtigungsdaten für einen Benutzer oder eine Person handeln.

Es kann sich bei den Daten auch um Schlüsseldaten handeln, um beispielsweise eine Maschine in einem nicht aktivierten Zustand zu halten und einen unsicheren Start der Maschine zu vermeiden.

Eine zweite Art von jeweiligen nicht sicheren Daten, die nachfolgend beispielhaft erläutert wird, wird vorzugsweise mit der zweiten Sende-/Empfangseinheit übertragen.

Neben den Daten zur Identifizierung werden Daten zum Gerätestatus und/oder Gerätedaten an das Schlüsselgerät übertragen. Dabei kann es sich um Betriebsdaten, Prozessdaten oder ähnliche Daten handeln. Beispielsweise handelt es sich bei den Daten zum Gerätestatus um Fehlermeldungen oder um Daten zum Betriebsverhalten, beispielsweise Ausfallzeiten des Gerätes. Beispielsweise handelt es sich um Druckwerte eines Ventils.

Es kann sich aber auch um Bestätigungsdaten oder Protokolldaten des Gerätes handeln, die an das Schlüsselgerät übertragen werden.

Weiter kann es sich bei den Daten auch um Wartungsdaten oder Produktionsdaten handeln, die von dem Gerät an das Schlüsselgerät übertragen werden.

In Weiterbildung der Erfindung ist die erste und die zweite Sende-/Empfangseinheit jeweils eine RFID-Sende-/Empfangseinheit.

Eine RFID-Sende-/Empfangseinheit weist eine Antennenanordnung zur Kommunikation mit dem Gerät auf, welches beispielsweise einen RFID-Transponder aufweist, wobei der RFID-Transponder mindestens eine Spule zur Wechselwirkung mit der Antennenanordnung der RFID-Sende-/Empfangseinheit umfasst.

RFID-Sende-/Empfangseinheiten (Radio Frequency Identification) werden in Sender/Empfänger-Systemen zum automatischen und berührungslosen Identifizieren und/oder Lokalisieren von RFID-Transpondern mit Radiowellen verwendet. Ein RFID-System umfasst typischerweise zunächst den RFID-Transponder (auch als "Tag" oder "Funketikett" bezeichnet), der eine Antenne umfasst und sich am oder in dem Gerät befindet. Er umfasst in der Regel einen kennzeichnenden Identifizierungsdaten-Code, der über die Antennenanordnung von der RFID-Empfangseinheit bzw. dem RFID-Lesegerät des RFID-Systems (auch als "Transceiver" bezeichnet) abgefragt werden kann. Die RFID-Sende/Empfangseinheit umfasst dazu die Antennenanordnung und einen Transceiverschaltkreis (z. B. der EM405-Chip der Firma EM Microelectronics) zum Auslesen dieser Kennung von dem RFID-Transponder. Zum Auslesen der Kennung von dem RFID-Transponder erzeugt die RFID-Sende-/Empfangseinheit typischerweise magnetische Wechselfelder, um Signale an den RFID-Transponder zu übertragen. Der RFID-Transponder ist dazu ausgebildet, nach Erhalt eines entsprechenden Signals von der RFID-Sende-/Empfangseinheit Daten, insbesondere die Kennung, umfassendes Signal als Antwort an die RFID-Sende-/Empfangseinheit zurückzusenden, welches dieses mit der Auswerteeinheit auswertet und weiterverarbeitet.

Bei RFID-Systemen erzeugt die RFID-Sende-/Empfangseinheit magnetische Wechselfelder, die nicht nur zum Übertragen der Daten vorgesehen sind, sondern auch dazu dienen können, den RFID-Transponder mit Energie zu versorgen.

Ein RFID-System hat damit den Vorteil, dass der RFID-Transponder keine eigene Stromversorgung benötigt und daher flexibel eingesetzt werden kann. Der RFID-Transponder bezieht seine Energie über Funkwellen, bzw. Radiowellen aus der RFID-Sende-/Empfangseinheit. Der RFID-Transponder wird über die Antennenanordnung der RFID-Sende-/Empfangseinheit angesprochen und antwortet der RFID-Sende-/Empfangseinheit mit einer in dem RFID-Transponder abgespeicherten Information. Die vom Transponder des RFID-Systems übertragene Information wird von der Antennenanordnung empfangen und kann anschließend in der Auswerteeinheit ausgewertet werden. Die gespeicherte Information auf dem Transponder enthält mindestens eine Kennung, nämlich die Identifizierungsdaten, die den RFID-Transponder identifiziert.

Da die Erkennung des RFID-Transponders über Funkwellen erfolgt, ist das System sehr robust gegenüber Umwelteinflüssen. Daher kann die RFID-Sende-/Empfangseinheit mit dem RFID-Transponder in sehr rauen Umgebungen eingesetzt werden, beispielsweise in Industrieumgebungen, wo Schmierstoffe verwendet werden und es beispielsweise zu einem hohen Verschmutzungsgrad kommen kann.

Da die Erkennung des RFID-Transponders über Funkwellen erfolgt, ist im Unterschied zu einer optischen Lösung keine Sichtverbindung zwischen dem Schlüsselgerät und dem Gerät notwendig. Daher kann das Schlüsselgerät und das Gerät vollständig gekapselt werden, um diese vor schädlichen Umwelteinflüssen zu schützen.

In Weiterbildung der Erfindung weist das externe Gerät jeweils mindestens einen RFID-Transponder auf.

In Weiterbildung der Erfindung sind die Daten des Schlüsselgeräts an eine Schlüsselstation übertragbar.

Die Schlüsselstation ist beispielsweise außerhalb eines Sicherheitsbereiches angeordnet. Die Schlüsselstation nimmt das mindestens eine Schlüsselgerät in einer Aufnahme auf. Bei der Aufnahme kann es sich beispielsweise um ein Fach oder ein Steckfach handeln. Die Schlüsselstation ist dazu ausgebildet, das Schlüsselgerät auszulesen und die Daten des Schlüsselgerätes in einer Auswerteeinheit auszuwerten, bzw. an ein System weiterzuleiten.

In Weiterbildung der Erfindung ist es vorgesehen, dass das oder die Schlüsselgeräte nur von autorisierten Personen aus der Schlüsselstation entnommen werden können. Beispielsweise müssen sich die autorisierten Personen, wie Bedienpersonen oder Servicepersonen, mit Hilfe einer elektronischen Identitätskarte oder mit Hilfe anderer Identifikationsmittel an der Schlüsselstation anmelden, um ein Schlüsselgerät zu erhalten. Bei der Entnahme des Schlüsselgerätes wird beispielsweise von der Schlüsselstation eine Startkennung an das Schlüsselgerät gesendet.

Die Schlüsselgeräte können dabei auch bestimmten Personen zugewiesen sein, so dass ein bestimmtes Schlüsselgerät nur von einer bestimmten Person aufgenommen, bzw. mitgenommen werden kann.

In Weiterbildung der Erfindung ist die Schlüsselstation mit einem ERP-System verbindbar.

Ein Enterprise-Resource-Planning-System (ERP) bezeichnet ein System, das die unternehmerische Aufgabe hat, Ressourcen wie Kapital, Personal, Betriebsmittel, Material, Informations- und Kommunikationstechnik, IT-Systeme im Sinne des Unternehmenszwecks rechtzeitig und bedarfsgerecht zu planen und zu steuern. Gewährleistet werden sollen ein effizienter betrieblicher Wertschöpfungsprozess und eine stetig optimierte Steuerung der unternehmerischen und betrieblichen Abläufe.

Eine Kernfunktion von ERP-Systemen ist in produzierenden Unternehmen beispielsweise die Materialbedarfsplanung, die sicherstellen muss, dass alle für die Herstellung der Erzeugnisse und Komponenten erforderlichen Materialien an der richtigen Stelle, zur richtigen Zeit und in der richtigen Menge zur Verfügung stehen.

Ein ERP-System ist ein komplexes System, beispielsweise eine Vielzahl von miteinander kommunizierender Anwendungssoftware bzw. IT-Systemen, die zur Unterstützung der Ressourcenplanung des gesamten Unternehmens eingesetzt werden. Komplexe ERP-Systeme werden häufig in Teil-Systeme, beispielsweise Anwendungs-Module aufgeteilt, die je nach Unternehmensbedarf miteinander kombiniert werden können.

In Weiterbildung der Erfindung weisen die Daten eine Zeitangabe auf. Dadurch ist gewährleistet, wann die Daten in dem Gerät entstanden sind. Dadurch können die Daten zeitlich nacheinander sortiert und entsprechend ausgewertet werden.

Weiter ist optional ein Zugangsbereich zu dem Gerät vorgesehen. Der Zugangsbereich ist ein räumlich begrenzter Zugangsbereich mit einer Zugangsstation, beispielsweise ein Tor oder eine Tür. Nur durch diesen Zugangsbereich ist der Sicherheitsbereich der Anlage zugänglich. Es können auch mehrere Zugangsbereiche angeordnet sein. Gerade bei sehr großen Anlagen mit beispielsweise mehreren Sicherheitsbereichen kann dies sinnvoll sein.

Die Zugangsstation kann beispielsweise elektronische Mittel, wie beispielsweise einen elektronischen Türschalter aufweisen, wodurch überprüfbar ist, ob der Zugangsbereich geöffnet wurde.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein System mit einem mobilen Schlüsselgerät;
- Figur 2: ein System und eine Anlage mit mehreren mobilen Schlüsselgeräten.

In den nachfolgenden Figuren sind identische Teile mit identischen Bezugszeichen versehen.

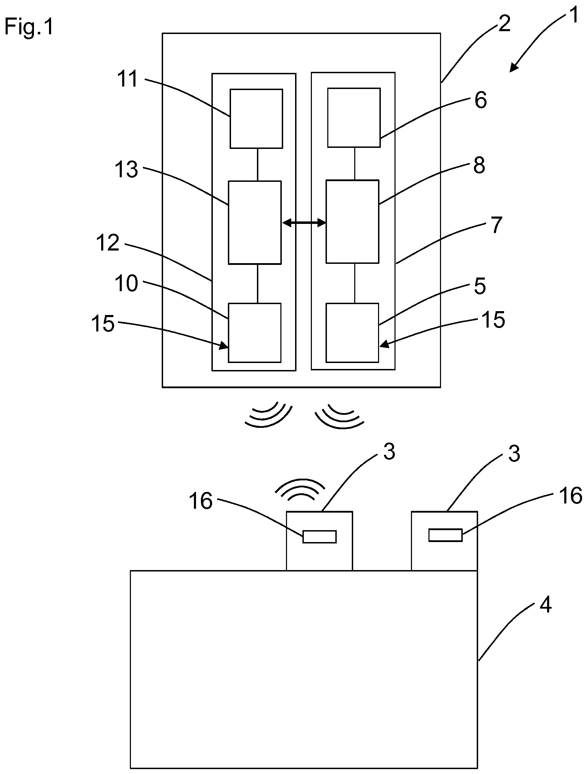

Figur 1 zeigt ein System 1 mit einem mobilen Schlüsselgerät 2 zum Lesen und Schreiben von Daten von mindestens einem externen Gerät 3 einer Anlage 4, wobei die Daten mindestens Identifizierungsdaten für das zu überprüfende Gerät 3 umfassen und wobei das mobile Schlüsselgerät 2 eine erste Sende-/Empfangseinheit 5 aufweist, mittels der die Daten drahtlos zwischen dem Gerät 3 zu dem Schlüsselgerät 2 übertragbar sind, wobei das Schlüsselgerät 2 einen ersten Speicher 6 aufweist, das Schlüsselgerät 2 mindestens einen ersten sicheren Kanal 7 aufweist mit einer ersten Auswerteeinheit 8, und der ersten Sende-/Empfangseinheit 5 und mindestens einen zweiten Kanal 12 aufweist mit einer zweiten Auswerteeinheit 13 und einer zweiten Sende-/Empfangseinheit 10 mittels der Daten drahtlos zwischen dem Gerät 3 zu dem Schlüsselgerät 2 übertragbar sind, wobei die Daten wenigsten mit einer der Sende-/Empfangseinheiten 5, 10 übertragbar sind.

Es handelt sich beispielsweise um ein handliches Schlüsselgerät 2, das problemlos von einer Person getragen bzw. mitgeführt werden kann. Optional weist das Schlüsselgerät 2 Bedienelemente und optional mindestens ein Anzeigeelement auf.

Die Auswerteeinheiten 8 und 13 sind beispielsweise durch einen Mikrocontroller gebildet. Der Speicher 6 ist vorgesehen, um Daten auf dem Schlüsselgerät abzuspeichern. Optional ist ein zweiter Speicher 11 vorgesehen der mit der zweiten Auswerteeinheit 13 verbunden ist. Dadurch ist es möglich Daten redundant abzuspeichern.

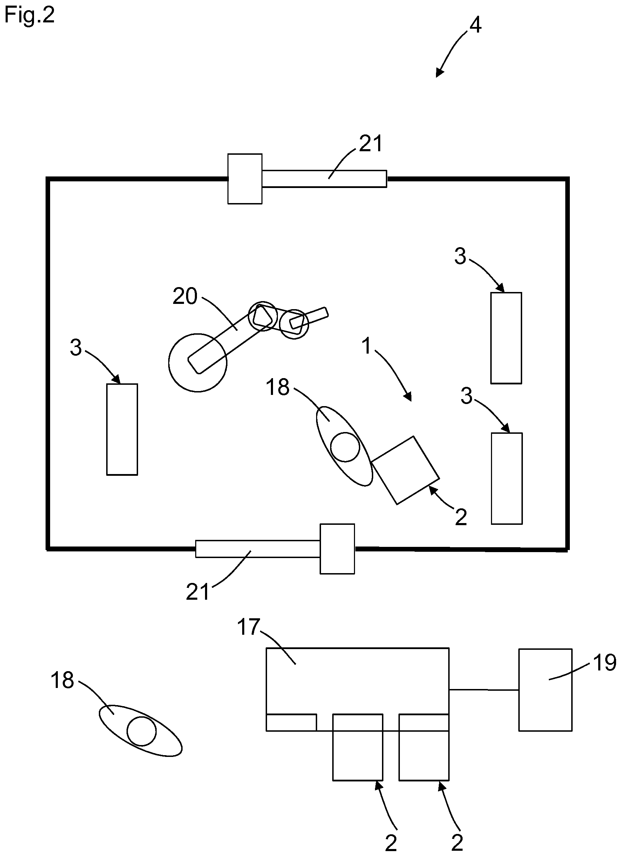

Bei der Anlage 4 kann es sich gemäß Figur 2 beispielsweise um eine Industrieanlage zur Herstellung von Produkten handeln. Beispielsweise handelt es sich hierbei um einen Teil einer Produktionsanlage für Automobile. Bei der Anlage kann es sich auch um einen Teil einer Maschine oder um eine Anlage mit mehreren Maschinen handeln. Die Anlage 4 weist einen Sicherheitsbereich auf, der nicht von Personen 18 betreten werden darf, wenn die Anlage aktiv ist, da die Person 18 durch Teile der Anlage gefährdet werden kann. Beispielsweise handelt es sich bei der Anlage um einen oder mehrere Roboter 20, deren gefährlicher Wirkungsbereich innerhalb des Sicherheitsbereiches liegt.

Weiter ist optional ein Zugangsbereich 21 zu den Geräten 3 in der Anlage 4 vorgesehen. Der Zugangsbereich 21 ist ein räumlich begrenzter Zugangsbereich 21 mit einer Zugangsstation, beispielsweise ein Tor oder eine Tür. Nur durch diesen Zugangsbereich 21 ist der Sicherheitsbereich der Anlage 4 zugänglich. Es können auch mehrere Zugangsbereiche 21 angeordnet sein. Gerade bei sehr großen Anlagen 4 mit beispielsweise mehreren Sicherheitsbereichen kann dies sinnvoll sein.

Die Zugangsstation kann beispielsweise elektronische Mittel, wie beispielsweise einen elektronischen Türschalter aufweisen, wodurch überprüfbar ist, ob der Zugangsbereich 21 geöffnet wurde.

Das mindestens eine externe Gerät 3 ist beispielsweise innerhalb des Sicherheitsbereiches angeordnet. Das oder die Geräte 3 sind beispielsweise ortsfest angeordnet, so dass diese nicht entfernt werden können. Es kann sich aber auch um mobile Geräte 3 handeln. Das Gerät 3 ist beispielsweise in der Anlage 4 integriert.

Das Gerät 3 gemäß Figur 1 enthält mindestens Daten zur Identifizierung, die über die erste Sende-/Empfangseinheit 5 oder die zweite Sende/Empfangseinheit 10 drahtlos von dem Schlüsselgerät abgerufen werden können. Bei der ersten Sende-/Empfangseinheit 5 oder der zweiten Sende-/Empfangseinheit 10 handelt es sich bevorzugt um eine Funk-Sende-/Empfangseinheit.

Bei dem Gerät 3 kann es sich beispielsweise um ein Ventil, einen Aktor, einen Sensor oder ein sonstiges elektrisches bzw. elektronisches Gerät handeln.

Eine erste Art von jeweiligen Daten wird vorzugsweise mit der ersten Sende-/Empfangseinheit 5 übertragen. Bei diesen Daten kann es sich beispielsweise um Steuerdaten für das Gerät 3 handeln, die von dem Schlüsselgerät 2 an das Gerät 3 übermittelt werden.

Eine zweite Art von jeweiligen Daten wird vorzugsweise mit der zweiten Sende-/Empfangseinheit 10 übertragen. Neben den Daten zur Identifizierung werden Daten zum Gerätestatus und/oder Gerätedaten an das Schlüsselgerät 2 übertragen.

Gemäß Figur 2 wird das Schlüsselgerät von der Person 18 mitgeführt, um die Geräte 3 zu erreichen. Während die Person 18 das Schlüsselgerät 2 mit sich führt, kann die Anlage 4 beispielsweise deaktiviert sein.

Das Übertragen von Daten zwischen dem Schlüsselgerät 2 und dem Gerät 3 kann automatisch erfolgen. D. h. wenn sich die Person 18 dem Gerät 3 auf einen bestimmten Mindestabstand genähert hat, werden die Daten des Geräts 3 automatisch von dem Schlüsselgerät 2 gelesen.

Die Person 18, die das Schlüsselgerät 2 mit sich führt, kann optional mit dem Schlüsselgerät 2 selbst von dem Gerät 3 die Daten übertragen oder die Daten an das Gerät 3 übertragen. Dazu kann beispielsweise vorgesehen sein, dass von der Person 18 beispielsweise eine Aktion, beispielsweise ein Betätigen einer Taste an dem Schlüsselgerät 2 durchgeführt werden muss. Dadurch ist gewährleistet, dass die Daten des Geräts 3 durch das Schlüsselgerät 2 nicht automatisch übertragen werden, sondern immer eine aktive Handlung der Person 18 notwendig ist, um die Daten zu übertragen.

Gewöhnlich sind gemäß Figur 2 eine Vielzahl von Geräten 3 vorhanden. Insbesondere bei großen Anlagen 4 bzw. großen Sicherheitsbereichen bzw. große Anlagen 4 mit einer Mehrzahl von Sicherheitsbereichen sind mehrere Geräte 3 vorhanden. Dabei kann vorgesehen sein, dass das Schlüsselgerät mindestens Daten von einem Gerät 3 überträgt. Jedoch ist insbesondere auch vorgesehen, dass ein Schlüsselgerät 2 von mehreren Geräten 3 Daten überträgt. Insbesondere ist es vorgesehen, dass das Schlüsselgerät 2 von mehreren Geräten 3 in einer bestimmten Reihenfolge Daten überträgt.

Die Kommunikation zwischen dem Schlüsselgerät 2 und dem Gerät 3 kann unidirektional oder bidirektional stattfinden. Im einfachsten Fall genügt ein einfaches Lesen der Daten des Gerätes 3. Jedoch kann es auch vorgesehen sein, dass von dem Schlüsselgerät 2 Daten in das Gerät 3 geschrieben werden.

Gemäß Figur 1 weist die erste Sende-/Empfangseinheit 5 eine niedrige Reichweite auf und die zweite Sende-/Empfangseinheit 10 eine hohe Reichweite auf.

Dadurch können durch die erste Sende-/Empfangseinheit 5 nicht automatisch Daten übermittelt werden, wenn sich das Schlüsselgerät 2 zu weit weg von dem Gerät 3 befindet.

Jedoch kann über die zweite Sende-/Empfangseinheit 10 eine Datenübertragung vorgenommen werden, bei einer hohen Reichweite also einer größeren Distanz zum Gerät 3 als bei der ersten Sende-/Empfangseinheit 5.

Dadurch kann über die zweite Sende-/Empfangseinheit 10 vorher eine Datenübertragung durchgeführt werden, bevor dies mit der ersten Sende-/Empfangseinheit 5 möglich ist, wenn sich die Person 18 gemäß Figur 2 mit dem Schlüsselgerät 2 dem Gerät 3 nähert.

Gemäß Figur 1 ist der erste Kanal 7 zum Senden und Empfangen von sicheren Daten ausgebildet, und der zweite Kanal 12 zum Senden und Empfangen von nicht sicheren Daten ausgebildet.

Eine erste Art von jeweiligen sicheren Daten wird vorzugsweise mit der ersten Sende-/Empfangseinheit 5 übertragen.

Bei diesen Daten kann es sich beispielsweise um Steuerdaten für das Gerät 3 handeln, die von dem Schlüsselgerät 2 an das Gerät 3 übermittelt werden. Beispielsweise können die Daten Befehle für die Maschinensteuerung, beispielsweise Abschaltbefehle oder Steuerbefehle enthalten. Es kann sich bei den Daten auch um Identifizierungsdaten oder Berechtigungsdaten für einen Benutzer oder eine Person 18 handeln.

Es kann sich bei den Daten auch um Schlüsseldaten handeln, um beispielsweise eine Maschine in einen nicht aktivierten Zustand zu halten und einen unsicheren Start der Maschine zu vermeiden.

Eine zweite Art von jeweiligen nicht sicheren Daten wird vorzugsweise mit der zweiten Sende-/Empfangseinheit 10 übertragen.

Neben den Daten zur Identifizierung werden Daten zum Gerätestatus und/oder Gerätedaten an das Schlüsselgerät 2 übertragen. Dabei kann es sich um Betriebsdaten, Prozessdaten oder ähnliche Daten handeln. Beispielsweise handelt es sich bei den Daten zum Gerätestatus um Fehlermeldungen oder um Daten zum Betriebsverhalten, beispielsweise Ausfallzeiten des Gerätes. Beispielsweise handelt es sich um Druckwerte eines Ventils.

Es kann sich aber auch um Bestätigungsdaten oder Protokolldaten des Gerätes 3 handeln, die an das Schlüsselgerät 2 übertragen werden. Weiter kann es sich bei den Daten auch um Wartungsdaten oder Produktionsdaten handeln, die von dem Gerät 3 an das Schlüsselgerät 2 übertragen werden.

Gemäß Figur 1 ist die erste Sende-/Empfangseinheit 5 und die zweite Sende-/Empfangseinheit 10 jeweils eine RFID-Sende-/Empfangseinheit 15. Gemäß Figur 1 weist das externe Gerät 3 jeweils mindestens einen RFID-Transponder 16 auf.

Gemäß Figur 2 sind die Daten des Schlüsselgeräts 2 an eine Schlüsselstation 17 übertragbar. Die Schlüsselstation 17 ist beispielsweise außerhalb eines Sicherheitsbereiches angeordnet. Die Schlüsselstation 17 nimmt das mindestens eine Schlüsselgerät 2 in einer Aufnahme auf. Bei der Aufnahme kann es sich beispielsweise um ein Fach oder ein Steckfach handeln. Die Schlüsselstation 17 ist dazu ausgebildet, das Schlüsselgerät 2 auszulesen und die Daten des Schlüsselgerätes 2 in einer Auswerteeinheit auszuwerten bzw. an ein System weiterzuleiten.

Gemäß Figur 2 ist es vorgesehen, dass das oder die Schlüsselgeräte 2 nur von autorisierten Personen 18 aus der Schlüsselstation 17 entnommen werden können. Beispielsweise müssen sich die autorisierten Personen 18, wie Bedienpersonen oder Servicepersonen, mit Hilfe einer elektronischen Identitätskarte oder mit Hilfe anderer Identifikationsmittel an der Schlüsselstation 17 anmelden, um ein Schlüsselgerät 2 zu erhalten. Bei der Entnahme des Schlüsselgerätes 2 wird beispielsweise von der Schlüsselstation 17 eine Startkennung an das Schlüsselgerät 2 gesendet.

Die Schlüsselgeräte 2 können dabei auch bestimmten Personen 18 zugewiesen sein, so dass ein bestimmtes Schlüsselgerät 2 nur von einer bestimmten Person 18 aufgenommen bzw. mitgenommen werden kann. Gemäß Figur 2 ist die Schlüsselstation 17 mit einem ERP-System 19 verbindbar.

### Bezugszeichen:

1 System
2 Schlüsselgerät
3 externes Gerät
4 Anlage
5 erste Sende-/Empfangseinheit
6 erster Speicher
7 erster sicherer Kanal
8 erste Auswerteeinheit
10 zweite Sende-/Empfangseinheit
11 zweiter Speicher
12 zweiter Kanal
13 zweite Auswerteeinheit
15 RFID-Sende-/Empfangseinheiten
16 RFID-Transponder
17 Schlüsselstation
18 Person
19 ERP-System
20 Roboter
21 Zugangsbereich

## Patentansprüche

1. System mit einem mobilen Schlüsselgerät (2) zum Lesen und Schreiben von Daten von mindestens einem externen Gerät (3) einer Anlage (4), wobei die Daten mindestens Identifizierungsdaten für das zu überprüfende Gerät (3) umfassen und wobei das mobile Schlüsselgerät (2) eine erste Sende-/Empfangseinheit (5) aufweist, mittels der die Daten drahtlos zwischen dem Gerät (3) zu dem Schlüsselgerät (2) übertragbar sind,
**dadurch gekennzeichnet, dass**
das Schlüsselgerät (2) einen ersten Speicher (6) aufweist,
das Schlüsselgerät (2) mindestens einen ersten sicheren Kanal (7) aufweist, mit einer ersten Auswerteeinheit (8) und der ersten Sende-/Empfangseinheit (5), und mindestens einen zweiten Kanal (12) aufweist, mit einer zweiten Auswerteeinheit (13) und einer zweiten Sende-/Empfangseinheit (10) mittels der Daten drahtlos zwischen demselben Gerät (3) zu dem Schlüsselgerät (2) übertragbar sind, wobei die Daten wenigstens mit einer der Sende-/Empfangseinheiten übertragbar sind.

2. System nach Anspruch 1, **dadurch gekennzeichnet, dass** die erste Sende-/Empfangseinheit (5) eine niedrige Reichweite aufweist und die zweite Sende-/Empfangseinheit (10) eine hohe Reichweite aufweist.

3. System nach mindestens einem der vorhergehenden Ansprüche, **dadurch gekennzeichnet, dass** der erste sichere Kanal (7) zum Senden und Empfangen von sicheren Daten ausgebildet ist und der zweite Kanal (12) zum Senden und Empfangen von nicht sicheren Daten ausgebildet ist.

4. System nach mindestens einem der vorhergehenden Ansprüche, **dadurch gekennzeichnet, dass** die erste Sende-/Empfangseinheit (5) und die zweite Sende-/Empfangseinheit (10) jeweils eine RFID-Sende-/Empfangseinheit (15) ist.

5. System nach mindestens einem der vorhergehenden Ansprüche, **dadurch gekennzeichnet, dass** das externe Gerät (3) jeweils mindestens einen RFID-Transponder (16) aufweist.

6. System nach mindestens einem der vorhergehenden Ansprüche, **dadurch gekennzeichnet, dass** die Daten des Schlüsselgeräts (2) an eine Schlüsselstation (17) übertragbar sind.

7. System nach mindestens einem der vorhergehenden Ansprüche, **dadurch gekennzeichnet, dass** das Schlüsselgerät (2) einer Schlüsselstation (17) zugeordnet ist und nur von autorisierten Personen (18) aus der Schlüsselstation (17) entnehmbar ist.

8. System nach mindestens einem der Ansprüche 6 bis 7, **dadurch gekennzeichnet, dass** die Schlüsselstation (17) mit einem ERP-System (19) verbindbar ist.

9. System nach mindestens einem der vorhergehenden Ansprüche, **dadurch gekennzeichnet, dass** die Daten eine Zeitangabe aufweisen.

## Claims

1. A system having a mobile key unit (2) for reading and writing data from at least one external device (3) of a facility (4), wherein the data at least comprise identification data for the device (3) to be checked, and wherein the mobile key unit (2) has a first transmission/reception unit (5) by means of which data can be wirelessly transmitted between the device (3) and the key unit (2),
**characterized in that**
the key unit (2) has a first memory (6);
the key unit (2) has at least one first secure channel (7) having a first evaluation unit (8) and the first transmission/reception unit (5);
and has at least one second channel (12) having a second evaluation unit (13) and a second transmission/reception unit (10) by means of which data can be wirelessly transmitted between the same device (3) and the key unit (2), with the data being able to be transmitted using at least one of the transmission/reception units.

2. A system in accordance with claim 1, **characterized in that** the first transmission/reception unit (5) has a low range and the second transmission/reception unit (10) has a high range.

3. A system in accordance with at least one of the preceding claims,
**characterized in that** the first secure channel (7) is configured for transmitting and receiving secure data and the second channel (12) is configured for transmitting and receiving insecure data.

4. A system in accordance with at least one of the preceding claims,
**characterized in that** the first transmission/reception unit (5) and the second transmission/reception unit (10) are each an RFID transmission/reception unit (15).

5. A system in accordance with at least one of the preceding claims,
**characterized in that** the external device (3) has a respective at least one RFID transponder (16).

6. A system in accordance with at least one of the preceding claims,
**characterized in that** the data of the key unit (2) can be transmitted to a key station (17).

7. A system in accordance with at least one of the preceding claims,
**characterized in that** the key unit (2) is associated with a key station (17) and can only be removed from the key station (17) by authorized persons (18).

8. A system in accordance with at least one of the claims 6 to 7, **characterized in that** the key station (17) is connectable to an ERP system.

9. A system in accordance with at least one of the preceding claims,
**characterized in that** the data have a time stamp.

## Revendications

1. Système comportant un appareil clé mobile (2) pour lire et écrire des données d'au moins un appareil externe (3) d'une installation (4), les données comprenant au moins des données d'identification pour l'appareil à contrôler (3) et l'appareil clé mobile (2) présentant une première unité d'émission/réception (5) au moyen de laquelle les données sont transférables sans fil entre l'appareil (3) vers l'appareil clé (2),
**caractérisé en ce que**
l'appareil clé (2) comprend une première mémoire (6),
l'appareil clé (2) comprend au moins un premier canal sécurisé (7) pourvu d'une première unité d'évaluation (8) et de la première unité d'émission/réception (5), et au moins un second canal (12) pourvu d'une seconde unité d'évaluation (13) et d'une seconde unité d'émission/réception (10) au moyen de laquelle les données sont transférables sans fil entre le même appareil (3) vers l'appareil clé (2), les données étant transférables au moins avec l'une des unités d'émission/réception.

2. Système selon la revendication 1, **caractérisé en ce que** la première unité d'émission/réception (5) présente une faible portée et la seconde unité d'émission/réception (10) présente une longue portée.

3. Système selon l'une au moins des revendications précédentes, **caractérisé en ce que** le premier canal sécurisé (7) est réalisé pour l'émission et la réception de données sécurisées, et le second canal (12) est réalisé pour l'émission et la réception de données non sécurisées.

4. Système selon l'une au moins des revendications précédentes, **caractérisé en ce que** la première unité d'émission/réception (5) et la seconde unité d'émission/réception (10) sont chacune une unité d'émission/réception RFID (15).

5. Système selon l'une au moins des revendications précédentes, **caractérisé en ce que** l'appareil externe (3) comprend au moins un transpondeur RFID (16) respectif.

6. Système selon l'une au moins des revendications précédentes, **caractérisé en ce que** les données de l'appareil clé (2) sont transférables à une station clé (17).

7. Système selon l'une au moins des revendications précédentes, **caractérisé en ce que** l'appareil clé (2) est associé à une station clé (17) et ne peut être enlevé de la station clé (17) que par des personnes autorisées (18).

8. Système selon l'une au moins des revendications 6 à 7, **caractérisé en ce que** la station clé (17) peut être connectée à un système ERP (19).

9. Système selon l'une au moins des revendications précédentes, **caractérisé en ce que** les données présentent une indication temporelle.
